# EUROPÄISCHE PATENTSCHRIFT

(11) **EP 1 612 124 B1**
(45) Veröffentlichungstag und Bekanntmachung des Hinweises auf die Patenterteilung: **24.10.2007**
(21) Anmeldenummer: 05009746.8
(22) Anmeldetag: 04.05.2005
(51) Int. Cl.: B62D 5/04, F16H 25/22

(54) **Kugelgewindetrieb**
Ball screw drive
Vis d'entraînement à billes

(30) Priorität: 12.05.2004 DE 102004023353
(43) Veröffentlichungstag der Anmeldung: 04.01.2006
(73) Patentinhaber: Schaeffler KG, 91074 Herzogenaurach (DE)
(72) Erfinder: Hartig, Günter, 91074 Herzogenaurach (DE); Osterlänger, Jürgen, 91448 Emskirchen (DE); Adler, Dieter, 91074 Herzogenaurach (DE); Kraus, Manfred, Dr., 91074 Herzogenaurach (DE); Mayer, Ralf, 91074 Herzogenaurach (DE)

(56) Entgegenhaltungen:
- EP-A- 1 357 012
- FR-A- 1 436 798
- US-A1- 2003 062 719

## Beschreibung

Die vorliegende Erfindung betrifft einen Kugelgewindetrieb, der beispielsweise als Komponente einer elektromechanischen Lenkhilfe in Lenkeinrichtungen von Kraftfahrzeugen zum Einsatz kommt.

Aus EP 0 814 012 B1 beispielsweise ist eine elektrische Hilfskraftlenkvorrichtung bekannt geworden, bei der ein Kugelgewindetrieb vorgesehen ist. Eine Zahnstange ist in axialer Verlängerung mit einer Spindel versehen, auf der eine Spindelmutter angeordnet ist. Zwischen der Spindelmutter und der Spindel wälzen Kugeln in Kugelrillen ab, die sowohl am Innenumfang der Spindelmutter als auch am Außenumfang der Spindel ausgebildet sind. Diese Kugelrillen begrenzen einen Lastkanal, in dem die Kugeln unter Last abwälzen können. Für einen endlosen Umlauf der Kugeln umfasst die Spindelmutter eine so genannte Außenumlenkung, deren beide Kugeleingänge jeweils an ein Ende des Lastkanals angeschlossen sind, um die Kugeln von dem einen Ende des Lastkanals zu dem anderen Ende des Lastkanals endlos umzulenken. Die Außenumlenkung windet sich etwa über 180° um den Außenumfang der Spindelmutter herum. Am Ende des in der Regel mehrere Windungen umfassenden Lastkanals werden die Kugeln in die Außenumlenkung umgelenkt. Innerhalb der Umlenkung bewegen sich die Kugeln im lastfreien Rücklaufkanal. Sie werden von dort zu dem Anfang des Lastkanals umgelenkt und erneut entlang der Kugelrillen abgewälzt. Die Spindelmutter ist an ihren axialen Enden radial über ein Rillenkugellager gelagert. Femer ist auf der Spindelmutter drehfest ein Zahnrad angeordnet, das mit einem Antriebsritzel eines Elektromotors kämmt. Bei Anwendungen mit angetriebener Spindelmutter soll ein möglichst störungsfreier Betrieb gewährleistet sein. FR 1436798 beschreibt ein Kugelgewindetrieb gemäß Oberbegriff des Anspruchs 1.

Aufgabe der vorliegenden Erfindung ist es, einen Kugelgewindetrieb nach den Merkmalen des Oberbegriffs des Anspruchs 1 anzugeben, der zuverlässig arbeitet. Erfindungsgemäß wird diese Aufgabe dadurch gelöst, dass sich die Außenumlenkung von ihrem einen Kugeleingang bis zu ihren anderen Kugeleingang über eine zumindest annähernd volle Windung um die Drehachse der Spindelmutter herum erstreckt. Wenn die Spindelmutter beispielsweise durch ein ortsfest angebrachtes Antriebsritzel angetrieben wird, dreht die Spindelmutter mit ihrer Außenumlenkung relativ zur Krafteinleitungsstelle. Da die Außenumlenkung die Spindelachse mit etwa 360 ° umschlingt, ist sichergestellt, dass im Bereich der Krafteinleitung über eine volle Umdrehung der Spindelmutter eine gleiche Anzahl von Kugeln im Lastkanal die Last übertragen. Dem gegenüber sind bei herkömmlichen Kugelgewindetrieben Außenumlenkungen mit circa 180 ° Umlenkung bekannt. Das bedeutet, dass im Bereich von 0 - 180 ° in der Ebene der einwirkenden Radialkraft mehr Kugeln Last übertragen als in dem Bereich von 180 - 360°. Bei dem erfindungsgemäßen Kugelgewindetrieb ist aufgrund der gleichmäßigen Lastverteilung über einen vollständigen Umlauf der Spindelmutter eine konstante Steifigkeit gegeben. Die Steifigkeit der rotierenden Mutter ist gegenüber der Spindelmutter eines bekannten Kugelgewindetriebes erhöht. Schwingungen und Geräuschentwicklung sind reduziert, da immer eine gleiche Anzahl von Kugeln im Lastkanal die einwirkenden Kräfte übertragen. In anderen Worten ausgedrückt: zwischen den beiden Kugeleingängen der Außenumlenkung liegen etwa 360°°, bezogen auf die Spindelachse, so dass in der Ebene der Krafteinleitung in einer beliebigen Drehlage der Spindelmutter eine gleiche Anzahl von parallel zur Spindelachse Kugeln im Lastkanal Kräfte übertragen.

Die Außenumlenkung kann als mehrteiliges Umlenkelement ausgeführt sein, wobei eine innerhalb und entlang des Rücklaufkanals angeordnete erste Teilungsebene das Umlenkelement in mehrere Umlenkteile teilt. Der Rücklaufkanal weist üblicherweise einen etwa kreisförmigen Querschnitt auf, wobei die Umlenkteile jeweils mit einer diesen Rücklaufkanal begrenzenden Kugelrille versehen sind. Die Teilung entlang und innerhalb des Rücklaufkanals ermöglicht eine einfache Ausbildung der an der Außenumlenkung vorzusehenden Kugelrillen. Es können beispielsweise einfach ausgebildete Spritzwerkzeuge zum Einsatz kommen, bei denen eine derartige Kugelrille bereits vorgesehen ist. Die Außenumlenkung kann auf diese Art und Weise günstig aus Kunststoff im Spritzverfahren hergestellt werden.

Zur einfacheren Montage der Außenumlenkung bei dem erfindungsgemäßen Kugelgewindetrieb ist es zweckmäßig, wenn eine quer zum Rücklaufkanal angeordnete zweite Teilungsebene die als mehrteiliges Umlenkelement ausgeführte Außenumlenkung in Hälften teilt, wobei die zweite Teilungsebene wenigstens annähernd, vorzugsweise mittig zwischen den beiden Kugeleingängen der Außenumlenkung angeordnet ist. Zu beiden Seiten dieser zweiten Teilungsebene sind demzufolge Hälften von Umlenkteilen gebildet, welche Hälften jeweils um etwa 180 ° um die Spindelachse geschlungen sind. Beide Hälften eines Umlenkteiles umschlingen die Spindelachse mit etwa 360 °. Die Montage der Hälften ist vereinfacht. Wenn die Außenumlenkung aus hinreichend biegeelastischem Material hergestellt ist, kann die Außenumlenkung soweit aufgebogen werden, dass die Spindelmutter zwischen die Kugeleingänge der Außenumlenkung passt. In diesem Fall kann auf die zweite Teilungsebene verzichtet werden.

Eine fertigungstechnisch günstige und montagefreundliche Gestaltung eines erfindungsgemäßen Kugelgewindetriebes sieht vor, dass die Außenumlenkung durch die erste und die zweite Teilungsebene in zwei, jeweils aus Hälften gebildete Umlenkteile geteilt ist. Vorzugsweise sind diese Umlenkteile baugleich.

Vorzugsweise ist die Außenumlenkung derart auf der Spindelmutter angeordnet, dass der Rücklaufkanal tangential und im Steigungswinkel der Kugelrille der Spindelmutter an den Lastkanal anschließt. Das bedeutet, dass hohe Beschleunigungen der Kugeln beim Eintritt in den Rücktaufkana und beim Austritt aus dem Rücklaufkanal vermieden sind. Der Rücklaufkanal selbst weist vorzugsweise zwischen den beiden Kugeleingängen Bereiche unterschiedlicher Krümmung auf, die ohne Sprünge aneinander anschließen. Sogenannte Polygoneffekte, die zu einem Stau der Kugeln führen könnten, sind demzufolge vermieden.

Wenn die Außenumlenkung mehrteilig ausgeführt ist, ist es zweckmäßig, diese Umlenkteile form-, kraft-, oder stoffschlüssig miteinander zu verbinden, um eine einwandfreie Gestaltung des Rücklaufkanals zu gewährleisten.

Vorzugsweise ist die Außenumlenkung aus Kunststoff insbesondere im Spritzverfahren hergestellt. Mit der Wahl eines geeigneten Kunststoffes beispielsweise kann ein weitgehend geräuscharmer Betrieb gewährleistet werden. In günstiger Weise können zur Reduzierung von störenden Geräuschen als Werkstoff für die Außenumlenkung auch Gummi, gummiartige Werkstoffe, Elastomere eingesetzt werden.

Wenn auf der Spindelmutter ein Zahnriemenrad zum Antreiben der Spindelmutter angeordnet ist, sieht eine erfindungsgemäße Weiterbildung vor, dass innerhalb der axialen Erstreckung dieses Zahnriemenrades die Außenumlenkung untergebracht ist. Auf diese Weise ist ein in axialer Richtung Platz sparender Kugelgewindetrieb gebildet.

Wenn - wie weiter oben bereits ausgeführt wurde - eine innerhalb und entlang des Rücklaufkanals angeordnete erste Teilungsebene die als mehrteiliges Umlenkelement ausgeführte Außenumlenkung in Umlenkteile teilt, kann es zweckmäßig sein, dass eines dieser Umlenkteile einstückig mit dem Zahnriemenrad ausgebildet ist. Auf diese Weise kann die Teileanzahl reduziert werden.

Nachstehend wird die Erfindung anhand von 2 in insgesamt 19 Figuren abgebildeten Ausführungsbeispielen näher erläutert. Es zeigen:
Figur 1 einen erfindungsgemäßen Kugelgewindetrieb in perspektivischer Darstellung,
Figur 2 einen Längshalbschnitt durch den Kugelgewindetrieb aus Figur 1,
Figuren 3-14 einzelne Komponenten des erfindungsgemäßen Kugelgewindetriebes aus den Figuren 1 und 2 und
Figuren 15-20 Komponenten eines weiteren erfindungsgemäßen Kugelwindetriebes.

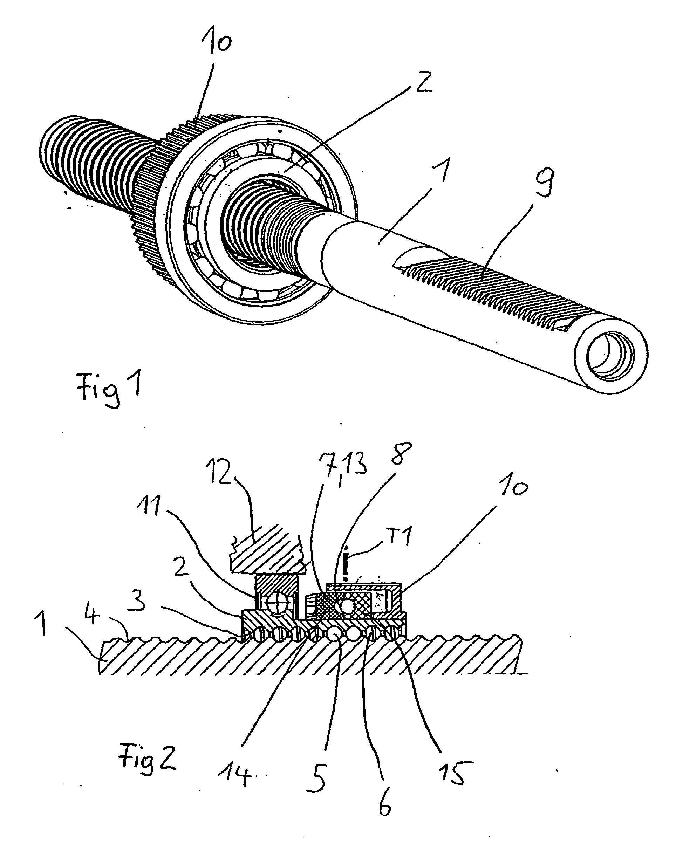

Figur 1 zeigt in perspektivischer Darstellung einen erfindungsgemäßen Kugelgewindetrieb und Figur 2 einen Längshalbschnitt durch diesen erfindungsgemäßen Kugelgewindetrieb. Auf einer Spindel 1 ist eine Spindelmutter 2 aufgesetzt, an deren Innenumfang eine entlang einer Schraubenlinie angeordnete Kugelrille 3 ausgebildet ist. Die Spindel 1 weist an ihrem Außenumfang eine entlang einer Schraubenlinie ausgebildete Kugelrille 4 auf. Kugeln 5 sind zwischen der Spindelmutter 2 und der Spindel 1 angeordnet und wälzen an den Kugelrillen 3 und 4 ab, wenn die Spindelmutter 2 relativ zur Spindel 1 gedreht wird. Die Kugelrillen 3 und 4 begrenzen einen Lastkanal 6, in den die Kugeln 5 unter Last an den Kugelrillen 3, 4 abwälzen können. Die Spindelmutter 2 umfaßt ferner eine Außenumlenkung 7, die einen Rücklaufkanal 8 für die Kugeln 5 aufweist. Der Rücklaufkanal 8 verbindet die Enden des Lastkanals 6 endlos miteinander, um einen endlosen Umlauf der Kugeln 5 im Lastkanal 6 und im Rücklaufkanal 8 zu gewährleisten.

Die Spindel 1 ist teilweise als Zahnstange ausgebildet und mit einem Zahnstangenprofil 9 versehen. Auf der Spindelmutter 2 ist ein Zahnriemenrad 10 drehfest angeordnet. Innerhalb der axialen Ersteckung des Zahnriemenrades 10 ist die Außenumlenkung 7 weitestgehend angeordnet. Die Spindelmutter 2 ist über ein Radialrillenkugellager 11 an einem Maschinenteil 12 drehbar gelagert. Das Zahnriemenrad 10 wird von einem hier nicht dargestellten Zahnriemen zum Antreiben der Spindelmutter 2 angetrieben.

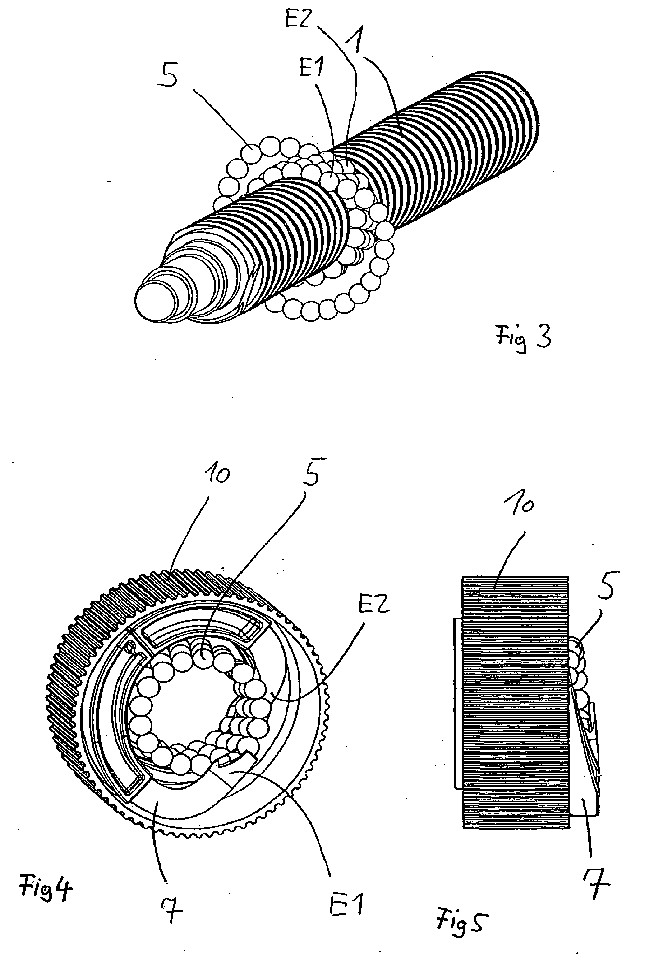

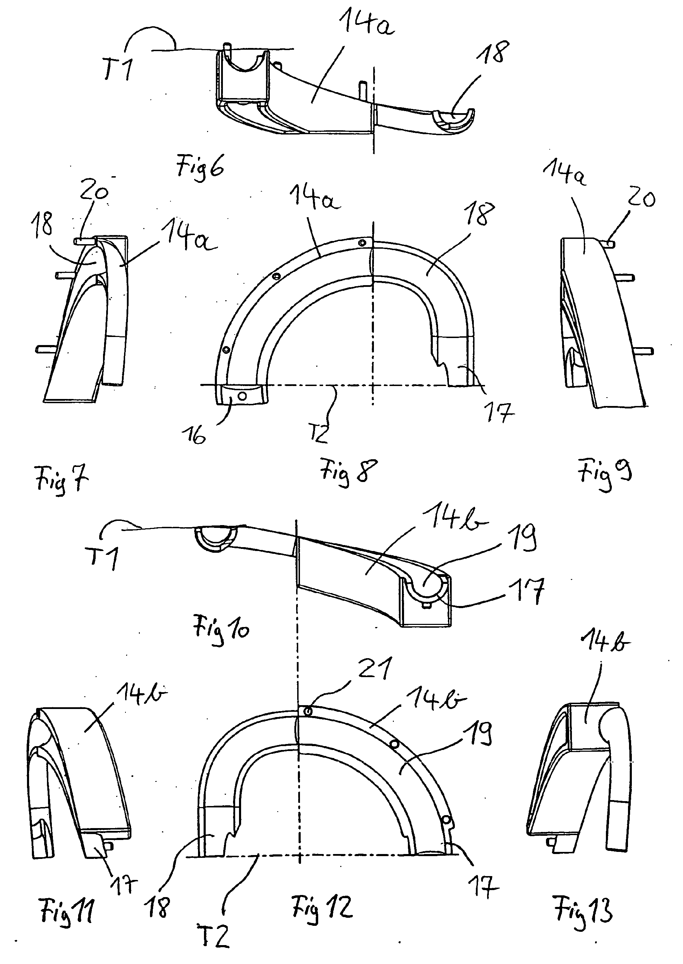

Figur 3 zeigt in perspektivischer Darstellung die Spindel 1 mit den für den Kugelgewindetrieb vorgesehenen Kugeln 5, wie sie im Rücklaufkanal und im Lastkanal abgeordnet sind. Dort wo die Kugeln 5 die Kugelrille 4 der Spindel 1 verlassen, also in die Außenumlenkung 7 eintreten, liegt ein Kugeleingang E1 der Außenumlenkung 7. Dort wo die Kugeln 5 die hier nicht abgebildete Außenumlenkung 7 wieder verlassen liegt der andere Kugeleingang E2 der Außenumlenkung 7. In der Figur 4 sind die Lagen der Kugeleingänge E1 und E2 der Außenumlenkung 7 angegeben. Der Figur 3 ist zu entnehmen, dass zwischen dem Kugeleingang E1 und dem Kugeleingang E2 etwa eine volle Windung um die Drehachse der Spindelmutter 2 liegt. Figur 3 zeigt deutlich, dass sich die Außenumlenkung 7 von ihrem einen Kugeleingang E1 bis zu ihrem anderen Kugeleingang E2 über eine volle Windung um die Drehachse der Spindelmutter 2 herum erstreckt.

Die Bahn der Kugeln 5 zwischen den beiden Kugeleingängen E1 und E2 entspricht gerade dem Verlauf des hier nicht abgebildeten Rücklaufkanals 8.

Figur 4 zeigt das Zahnriemenrad 20 mit der Außenumlenkung 7 und dem vorgesehenen Satz von Kugeln 5 in perspektivischier Darstellung.

Figur 5 zeigt eine Draufsicht auf die in Figur 4 abgebildete Komponente.

Der Figur 2 ist ferner zu entnehmen, dass eine innerhalb und entlang des Rücklaufkanals 8 angeordnete erste Teilungsebene T1 die als mehrteiliges Umlenkelement 13 ausgeführte Außenumlenkung 7 in Umlenkteile 14, 15 teilt.

In den Figuren 6 bis 9 ist eine Hälfte 14a des Umlenkteiles 14 in unterschiedlichen perspektivischen Darstellungen abgebildet. In Figur 8 ist eine zweite Teilungsebene T2 angedeutet, die etwa mittig zwischen den beiden Kugeleingängen E1 und E2 der Außenumlenkung 7 angeordnet ist und die das Umlenkteil 14 in zwei Hälften teilt. Figur 8 zeigt deutlich eine entlang der Teilungsebene T1 an der Hälfte 14a ausgebildete Kugelrille 18, die den Rücklaufkanal 8 begrenzt.

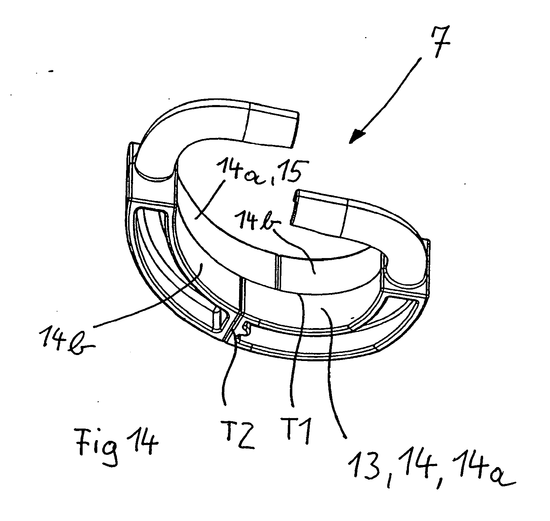

In den Figuren 10 bis 13 ist die andere Hälfte 14b des Umlenkteils 14 in verschiedenen perspektivischen Darstellungen abgebildet. Diese beiden Hälften 14a, 14b ergeben gemeinsam das Umlenkteil 14. In Figur 12 ist die Teilungsebene T2 angegeben. Das Umlenkteil 15 ist baugleich mit dem Unlenkteil 14. Figur 10 zeigt deutlich eine entlang der Teilungsebene T1 an der Hälfte 14b ausgebildete Kugelrille 19, die den Rücklaufkanal 8 begrenzt.

Bei diesem erfindungsgemäßen Kugelgewindetrieb umfasst das mehrteilige Umlenkelement 13 insgesamt also zwei Umlenkteile 14, 15, die jeweils aus den Hälften 14a, 14b gebildet sind. Die erste Teilungsebene T1 ermöglicht die Verwendung einfacher Spritzwerkzeuge. Die zweite Teilungsebene T2 ermöglicht ein problemloses Zusammensetzten der Hälften 14a, 14b zu dem jeweiligen Umlenkteil 14,15, wobei sich jede Hälfte 14a, 14b über etwa 180 ° um die Spindelachse herum erstreckt.

Die Hälfte 14a weist an ihrem einen Ende eine Aufnahme 16 auf. Die Hälfte 14b weist an ihrem einen Ende einen Vorsprung 17 auf. Die Hälfte 14a weist an der Teilungsebene T1 vorspringende Zapfen 20 auf, die quer zur Teilungsebene T1 angeordnet sind. Die Hälfte 14b weist an der Teilungsebene T1 quer zur Teilungsebene T1 angeordnete Bohrungen 21 auf. Zwei Hälften 14a, 14b werden zusammengesetzt, indem sie mit ihren Flächen entlang der Teilungsebene T1 aneinandergesetzt werden; die Zapfen 20 greifen dabei in die Bohrungen 21 ein. Zwei Hälften 14a, 14b werden zusammengesetzt, indem sie mit ihren an die Teilungsebene T2 angrenzenden einen Enden hintereinander gesetzt werden, wobei die Vorsprünge 17 in die Aufnahmen 16 eingreifen. Die vier zusammengebauten Hälften bilden das Umlenkelement 13, wie es in Figur 14 in perspektivischer Darstellung abgebildet ist.

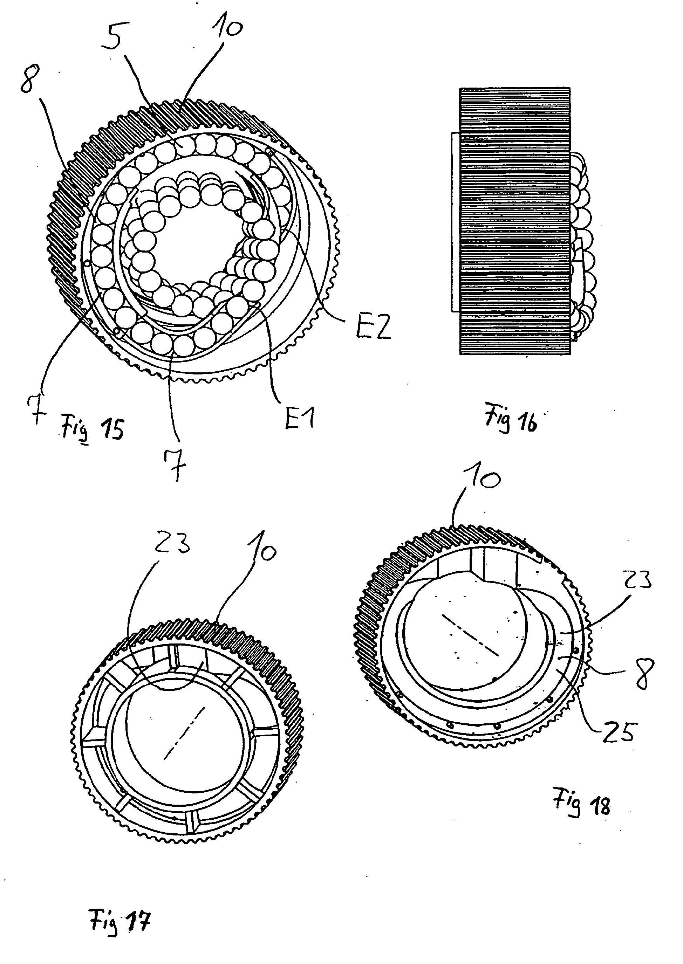

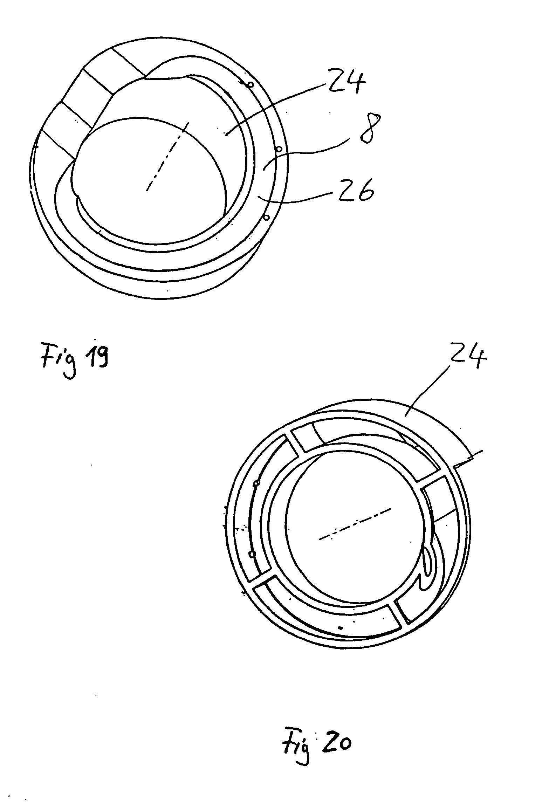

Der in den Figuren 15 bis 20 abgebildete erfindungsgemäße Kugelgewindetrieb unterscheidet sich von dem vorangegangenen erfindungsgemäßen Kugelgewindetrieb im Wesentlichen dadurch, dass die Außenumlenkung 7 lediglich die innerhalb und entlang des Rücklaufkanals 8 angeordnete erste Teilungsebene T1 aufweist, die hier ein mehrteiliges Umlenkelement 22 in insgesamt zwei Umlenkteile 23, 24 teilt. Figur 15 zeigt das Zahnrad 14 mit Außenumlenkung 7 und dem Satz von Kugeln 5 in perspektivischer Darstellung. Figur 16 zeigt eine Ansicht des in Figur 15 abgebildeten erfindungsgemäßen Kugelgewindetriebs. In den Figuren 17 und 18 ist das Umlenkteil 23 abgebildet, dass einstückig mit dem Zahnriemenrad 10 hergestellt ist. Das Umlenkteil 23 ist mit einer Kugelrille 25 versehen, die den Rücklaufkanal 8 begrenzt.

In den Figuren 19 und 20 ist in perspektivischer Darstellung das andere Umlenkteil 24 abgebildet. Das Umlenkteil 24 ist mit einer Kugelrille 26 versehen, die den Rücklaufkanal 8 begrenzt. Im vorliegenden Fall besteht die Außenumlenkung 7 lediglich aus dem einstückig mit dem Zahnriemenrad 10 hergestellten Umlenkteil 23 und dem als Einzelteil gebildeten Umlenkteil 24.

Die beiden oben beschriebenen erfindungsgemäßen Ausführungsbeispiele haben gemeinsam, dass sich zwischen den Kugeleingängen E1 und E2 der Außenumlenkung 7 ein Winkel um die Spindelachse von etwa 360 ° erstreckt. Auf diese Weise ist sichergestellt, dass unter stationären, auf das Zahnriemenrad 10 einwirkenden Radialkräften während einer vollen Umdrehung der Spindelmutter 2 eine gleichmäßige Belastung der Kugeln 5 im Lastkanal 6 erfolgt.

In Figur 2 ist zu erkennen, dass in der Blattebene zwei Kugeln 5 hintereinander angeordnet sind. Wenn eine gedachte Kraft, die auf die Spindelmutter 2 einwirkt, in der Blattebene liegt, dann sind in der Blattebene in jeder Drehlage der Spindelmutter 2 vier Kugeln 5 angeordnet, zwei oberhalb, zwei unterhalb der Spindelachse. Ferner schließen in beiden Fällen die Rücklaufkanäle 8 tangential und im Steigungswinkel der Kugelrille 3 der Spindelmutter 2 an den Lastkanal 6 an. Die Rücklaufkanäle 8 weisen Bereiche unterschiedlicher Krümmung auf, die ohne Sprünge aneinander anschließen.

### Bezugszeichen

- 1: Spindel
- 2: Spindelmutter
- 3: Kugelrille
- 4: Kugelrille
- 5: Kugeln
- 6: Lastkanal
- 7: Außenumlenkung
- 8: Rücklaufkanal
- 9: Zahnstangenprofil
- 10: Zahnriemenrad
- 11: Radialkugellager
- 12: Maschinenteil
- 13: Umlenkelement
- 14: Umlenkteil
- 14a: Hälfte
- 14b: Hälfte
- 15: Umlenkteil
- 16: Aufnahme
- 17: Vorsprung
- 18: Kugelrille
- 19: Kugelrille
- 20: Zapfen
- 21: Bohrung
- 22: Umlenkelement
- 23: Umlenkteil
- 24: Umlenkteil
- 25: Kugelrille
- 26: Kugelrille

- E1: Kugeleingang
- E2: Kugeleingang
- T1: Teilungsebene
- T2: Teilungsebene

## Patentansprüche

1. Kugelgewindetrieb, mit einer auf einer Spindel (1) aufsetzbaren Spindelmutter (2), an deren Innenumfang eine entlang einer Schraubenlinie angeordnete Kugelrille (3) einen Lastkanal (6) für Kugeln (5) begrenzt, wobei am Außenumfang der Spindelmutter (2) eine mit einem Rücklaufkanal (8) für die Kugeln (5) versehene Außenumlenkung (7) angeordnet ist, deren beide Kugeleingänge (E1, E2) jeweils an ein Ende des Lastkanals (6) angeschlossen sind, um die Kugeln (5) von dem einen Ende zu dem anderen Ende des Lastkanals (6) umzulenken, wobei die Außenumlenkung (7) von ihrem einen Kugeleingang (E1) bis zu ihrem anderen Kugeleingang (E2) über eine zumindest annähernd volle Windung um die Drehachse der Spindelmutter (2) herum erstreckt, wobei die Spindelmutter (2) ein Mutterteil aufweist, an dessen Innenumfang eine Kugelrille (3) zur Begrenzung des Lastkanals (6) ausgebildet ist, **dadurch gekennzeichnet, dass** die Außenumlenkung (7) auf dem Außenumfang des Mutterteils angeordnet ist.

2. Kugelgewindetrieb nach Anspruch 1, bei dem eine innerhalb und entlang des Rücklaufkanals (8) angeordnete erste Teilungsebene (T1) die als mehrteiliges Umlenkelement (13, 22) ausgeführte Außenumlenkung (7) in Umlenkteile (14, 15, 23, 24) teilt.

3. Kugelgewindetrieb nach Anspruch 1, bei dem eine quer zum Rücklaufkanal (8) angeordnete zweite Teilungsebene (T2) die als mehrteiliges Umlenkelement (13) ausgeführte Außenumlenkung (7) in Hälften (14a, 14b) teilt, wobei die zweite Teilungsebene (T2) wenigstens annähernd, vorzugsweise mittig zwischen den beiden Kugeleingängen (E1, E2) der Außenumlenkung (7) angeordnet ist.

4. Kugelgewindetrieb nach den Ansprüchen 2 und 3, bei dem die Außenumlenkung (7) durch die erste und die zweite Teilungsebene (T1, T2) in zwei Umlenkteile (14, 15) geteilt ist, die jeweils aus zwei Hälften (14a, 14b) gebildet sind.

5. Kugelgewindetrieb nach Anspruch 1, bei dem der Rücklaufkanal (8) tangential und im Steigungswinkel der Kugelrille (3) der Spindelmutter (2) an den Lastkanal (6) anschließt.

6. Kugelgewindetrieb nach Anspruch 5 bei dem der Rücklaufkanal (8) zwischen den beiden Kugeleingängen (E1, E2) der Außenumlenkung (7) Bereiche unterschiedlicher Krümmung aufweist, die ohne Sprünge aneinander anschließen.

7. Kugelgewindetrieb nach einem der vorangegangenen Ansprüche, bei dem die Umlenkteile (14, 15, 23, 24) form-, kraft-, oder stoffschlüssig miteinander verbunden sind.

8. Kugelgewindetrieb nach Anspruch 1, bei dem die Außenumlenkung (7) aus Kunststoff insbesondere im Spritzverfahren hergestellt ist.

9. Kugelgewindetrieb nach Anspruch 1, bei dem auf der Spindelmutter (2) ein Zahnriemenrad (10) angeordnet ist, innerhalb dessen axialer Erstreckung die Außenumlenkung (7) untergebracht ist.

10. Kugelgewindetrieb nach Anspruch 9, bei dem eines der Umlenkteile (23) des Umlenkelementes (22) einstückig mit dem Zahnriemenrad (10) ausgebildet ist.

## Claims

1. Ball screw drive, having a spindle nut (2) which can be placed on a spindle (1) and at the inner circumference of which a ball groove (3) which is arranged along a helix delimits a load channel (6) for balls (5), an outer deflection means (7) which is provided with a return channel (8) for the balls (5) being arranged on the outer circumference of the spindle nut (2), the two ball inlets (E1, E2) of which outer deflection means (7) are connected in each case to one end of the load channel (6), in order to deflect the balls (5) from one end to the other end of the load channel (6), the outer deflection means (7) extending, from its one ball inlet (E1) to its other ball inlet (E2), around the rotational axis of the spindle nut (2) over one at least approximately full winding, the spindle nut (2) having a nut part, on the inner circumference of which a ball groove (3) is formed for delimiting the load channel (6), **characterized in that** the outer deflection means (7) is arranged on the outer circumference of the nut part.

2. Ball screw drive according to Claim 1, in which a first dividing plane (T1) which is arranged within and along the return channel (8) divides the outer deflection means (7) which is configured as a multiple-piece deflection element (13, 22) into deflection parts (14, 15, 23, 24).

3. Ball screw drive according to Claim 1, in which a second dividing plane (T2) which is arranged transversely with respect to the return channel (8) divides the outer deflection means (7) which is configured as a multiple-piece deflection element (13) into halves (14a, 14b), the second dividing plane (T2) being arranged at least approximately, preferably centrally between the two ball inlets (E1, E2) of the outer deflection means (7).

4. Ball screw drive according to Claims 2 and 3, in which the outer deflection means (7) is divided by the first and second dividing planes (T1, T2) into two deflection parts (14, 15) which are formed in each case from two halves (14a, 14b).

5. Ball screw drive according to Claim 1, in which the return channel (8) adjoins the load channel (6) tangentially and at the pitch angle of the ball groove (3) of the spindle nut (2).

6. Ball screw drive according to Claim 5, in which, between the two ball inlets (E1, E2) of the outer deflection means (7), the return channel (8) has regions of different curvature which adjoin one another without jumps.

7. Ball screw drive according to one of the preceding claims, in which the deflection parts (14, 15, 23, 24) are connected to one another in a form-fitting, force-transmitting or material-to-material manner.

8. Ball screw drive according to Claim 1, in which the outer deflection means (7) is manufactured from plastic, in particular by the injection-moulding process.

9. Ball screw drive according to Claim 1, in which a toothed-belt pulley (10) is arranged on the spindle nut (2), the outer deflection means (7) being accommodated within the axial extent of the said toothed-belt pulley (10).

10. Ball screw drive according to Claim 9, in which one of the deflection parts (23) of the deflection element (22) is formed integrally with the toothed-pulley belt (10).

## Revendications

1. Vis d'entraînement à billes, avec un écrou de broche (2) qui peut être monté sur une broche (1) et sur la périphérie intérieure duquel une gorge à billes (3) disposée le long d'une hélice délimite un canal de charge (6) pour des billes (5), sachant qu'un renvoi extérieur (7) pourvu d'un canal de retour (8) pour les billes (5) est disposé sur la périphérie extérieure de l'écrou de broche (2), renvoi dont les deux entrées de billes (E1, E2) sont chacune raccordées à une extrémité du canal de charge (6), afin de renvoyer les billes (5) d'une extrémité du canal de charge (6) à l'autre, sachant que le renvoi extérieur (7) s'étend, depuis sa première entrée de billes (E1) jusqu'à son autre entrée de billes (E2) sur un tour au moins approximativement complet autour de l'axe de rotation de l'écrou de broche (2), sachant que l'écrou de broche (2) présente une partie d'écrou sur la périphérie intérieure de laquelle est formée la gorge à billes (3) pour délimiter le canal de charge (6), **caractérisée en ce que** le renvoi extérieur (7) est disposé sur la périphérie extérieure de la partie d'écrou.

2. Vis d'entraînement à billes selon la revendication 1, dans laquelle un premier plan de séparation (T1) disposé à l'intérieur et le long du canal de retour (8) divise le renvoi extérieur (7), réalisé sous forme d'élément de renvoi (13, 22) en plusieurs parties, en parties de renvoi (14, 15, 23, 24).

3. vis d'entraînement à billes selon la revendication 1, dans laquelle un deuxième plan de séparation (T2) disposé transversalement au canal de retour (8) divise le renvoi extérieur (7), réalisé sous forme d'élément de renvoi (13) en plusieurs parties, en moitiés (14a, 14b), sachant que le deuxième plan de séparation (T2) est disposé de préférence au moins approximativement centralement entre les deux entrées de billes (E1, E2) du renvoi extérieur (7).

4. Vis d'entraînement à billes selon les revendications 2 et 3, dans laquelle le renvoi extérieur (7) est divisé par le premier et le deuxième plans de séparation (T1, T2) en deux parties de renvoi (14, 15) qui sont chacune constituées de deux moitiés (14a, 14b).

5. Vis d'entraînement à billes selon la revendication 1, dans laquelle le canal de retour (8) se raccorde au canal de charge (6) tangentiellement et avec l'angle d'hélice de la gorge à billes (3) de l'écrou de broche (2).

6. vis d'entraînement à billes selon la revendication 5, dans laquelle le canal de retour (8) présente entre les deux entrées de billes (E1, E2) du renvoi extérieur (7) des régions de courbures différentes qui se raccordent entre elles sans discontinuités.

7. vis d'entraînement à billes selon l'une des revendications précédentes, dans laquelle les parties de renvoi (14, 15, 23, 24) sont reliées entre elles positivement, à force ou par liaison de matière.

8. vis d'entraînement à billes selon la revendication 1, dans laquelle le renvoi extérieur (7) est fabriqué en matière plastique, notamment par moulage par injection.

9. Vis d'entraînement à billes selon la revendication 1, dans laquelle une poulie de courroie crantée (10) est disposée sur l'écrou de broche (2), à l'intérieur de l'étendue axiale de laquelle est logé le renvoi extérieur (7).

10. vis d'entraînement à billes selon la revendication 9, dans laquelle une des parties de renvoi (23) de l'élément de renvoi (22) est réalisée d'un seul tenant avec la poulie de courroie crantée (10).
